# EUROPEAN PATENT SPECIFICATION

(11) **EP 4 447 169 B1**
(45) Date of publication and mention of the grant of the patent: **09.09.2026**
(21) Application number: 22927915.3
(22) Date of filing: 28.02.2022
(51) Int. Cl.: H01M 4/80, H01M 4/13, H01M 10/04, H01M 4/66

(54) **BATTERY CELL, BATTERY, ELECTRIC DEVICE, AND METHOD AND DEVICE FOR MANUFACTURING NEGATIVE ELECTRODE POLE PIECE**
BATTERIEZELLE, BATTERIE, ELEKTRISCHES GERÄT SOWIE HERSTELLUNGSVERFAHREN UND VORRICHTUNG FÜR EINE NEGATIVE ELEKTRODENPLATTE
CELLULE DE BATTERIE, BATTERIE, DISPOSITIF ÉLECTRIQUE, AINSI QUE PROCÉDÉ ET DISPOSITIF DE FABRICATION D'UNE PLAQUE D'ÉLECTRODE NÉGATIVE

(43) Date of publication of application: 16.10.2024
(73) Proprietor: Contemporary Amperex Technology (Hong Kong) Limited, Central, Central And Western District (HK)
(72) Inventor: CHEN, Yujie, Ningde, Fujian 352100 (CN); GE, Xiaoming, Ningde, Fujian 352100 (CN); FAN, Yulei, Ningde, Fujian 352100 (CN)
(74) Representative: Rowlands, Stuart Michael
(86) International application number: PCT/CN2022/078471
(87) International publication number: WO 2023/159634

(56) References cited:
- EP-A1- 3 866 221
- CA-A1- 2 152 644
- CN-A- 1 120 491
- CN-A- 101 136 475
- CN-A- 101 465 416
- CN-A- 103 282 552
- CN-A- 103 779 581
- CN-A- 105 870 491
- CN-A- 107 768 673
- CN-A- 113 451 583
- CN-U- 208 904 141
- JP-A- H10 334 898

## Description

### Technical Field

The present application relates to a field of batteries, and in particular, to a battery cell, a battery, an electric device, and a manufacturing method and device for the negative electrode plate.

### Background Art

In the design of metal electrode assembly, foam metal may be selected to be directly used as the negative electrode plate. However, in a conventional electrode assembly, the electrode assembly is easily deformed, which seriously affects the electrochemical performance of the electrode assembly.

CN 113 451 583 A discloses a composite current collector, a pole piece comprising the same, a lithium ion battery and an electronic device, wherein the composite current collector comprises a composite matrix and metal layers; the composite matrix comprises a conductive net and a polymer layer filled in pores of the conductive net, and the polymer layer and the conductive net form an interpenetrating structure; and the metal layers are located on the surfaces of the two sides of the composite matrix and electrically communicated with the conductive net. According to the composite current collector provided by the invention, the metal layers are in contact with the conductive net in the composite matrix, so that mutual conduction between the upper metal layer and the lower metal layer is realized.

CA 2 152 644 A1 discloses a foam product, at least comprising a metal foam, and handling means which can be in the form of one or more local increases in the wall thickness of the pores of the metal foam, or in the form of one or more local fillings of the pores of the metal foam with a filling material which is essentially solid after application.

### Summary

In view of the above problems, the present application provides a battery cell, a battery, an electric device, and a manufacturing method and device for the negative electrode plate, which can alleviate the problem that the electrode assembly is easily deformed.

In a first aspect, the present application discloses a negative electrode plate, including a foam metal layer, wherein at least one part of the foam metal layer is a filled region, pores of the filled region are filled with a filler, and the filler is configured to have a projection, in the thickness direction of foam metal layer, at least partially overlapping with the projection of a coated region of the positive electrode plate.

One part of the foam metal layer is provided as the filled region, and since the pores of the filled region are filled with the filler, the filled region has high compactness and good supporting effect, enabling better pressure bearing capacity of the foam metal layer. On the basis that the foam metal layer is provided with the filled region, the filler in the filled region is configured to be at least partially stacked with the coated region of the positive electrode plate. When the negative electrode plate and the positive electrode plate are stacked to make the electrode assembly, the negative electrode plate can better bear the pressure from the positive electrode plate, and can improve the phenomenon that the negative electrode plate is deformed under pressure, thereby alleviating the problem that the electrode assembly is easily deformed.

In the thickness direction of the foam metal layer, the projection of at least one end of the coated region of the positive electrode plate in a first direction overlaps with the projection of the filler, and the first direction is perpendicular to the thickness direction of the foam metal layer. In this design, in the thickness direction of the foam metal layer, the filler is configured to be stacked with the end of the coated region of the positive electrode plate in the first direction, enabling it to support the end of the coated region of the positive electrode plate in the first direction through the filled region, and ensuring that the negative electrode plate better bears the pressure of the coated region of the positive electrode plate.

The foam metal layer includes a negative electrode body and a negative electrode tab, the negative electrode body and the negative electrode tab are distributed in the first direction, each of the two ends of the negative electrode body opposite to each other in the first direction has the filled region, and the first direction is perpendicular to the thickness direction of the foam metal layer. In this design, each of the two ends of the negative electrode body in the first direction has the filled region, enabling that the two ends of the negative electrode body in the first direction both can better bear the pressure of the coated region of the positive electrode plate. Meanwhile, the fillers of the filled regions at two ends of the negative electrode body make it convenient to realize stacking with the two ends of the coated region of the positive electrode plate respectively, enabling the negative electrode plate to better bear the pressure of the coated region of the positive electrode plate.

In some embodiments, the filler is continuously provided in a second direction, and the second direction is perpendicular to the first direction and the thickness direction of the foam metal layer. In this design, the filler is continuously provided in the second direction, so that the filler has a larger distribution range in the second direction, and thus the negative electrode plate can better bear the pressure of the coated region of the positive electrode plate.

In some embodiments, in the second direction, the dimension of the coated region of the positive electrode plate is L1, and the dimension of the filler of a single filled region is L2, L1≤L2. In this design, the filler is provided such that the dimension thereof in the second direction is not lower than that of the coated region of the positive electrode plate, enabling that the filler can be stacked with the coated region of the whole positive electrode plate in the second direction, and ensuring that the negative electrode plate can better support the coated region of the whole positive electrode plate.

In some embodiments, in the second direction, the dimension of the foam metal layer is L2, L2=L3. In this design, the filler is provided such that the dimension thereof in the second direction is equal to the dimension of the foam metal layer in the second direction. That is, in the second direction, the filler extends from one end of the foam metal layer to the other end. On the one hand, the filler can improve the stretch resistance of the foam metal layer in the second direction, improving the phenomenon that the negative electrode plate deforms under a pulling force and further alleviating the problem that the electrode assembly is easily deformed; and on the other hand, the filler has the effect of partitioning, wherein in the case that each of the two ends of the negative electrode body in the first direction is provided with the filled region, the fillers at the two ends are beneficial to prevent metal particles at the outer side from entering the interior of the negative electrode body. This effectively avoids problems such as short circuit and thermal failure in subsequent cycles caused by the metal particles entering the interior of the negative electrode body.

In some embodiments, in the first direction, the dimension of the coated region of the positive electrode plate is M1, and the dimension of the overlapping region of the projection of the filler of a single filled region in the thickness direction of the foam metal layer and the projection of the coated region of the positive electrode plate in the thickness direction of the foam metal layer is M2, M2/M1≥3%. In this design, the ratio of the dimension of the overlapping region of the filler in the single filled region and the coated region of the positive electrode plate in the first direction to the dimension of the coated region of the positive electrode plate is controlled at a standard of ≥ 3%, ensuring that the negative electrode plate reliably supports the coated region of the positive electrode plate.

In some embodiments, MI/M1≤10%. In this design, the ratio of the dimension of the overlapping region of the filler in the single filled region and the coated region of the positive electrode plate in the first direction to the dimension of the coated region of the positive electrode plate is controlled at a standard of ≤ 10%, ensuring that a large range of unfilled region in the foam metal layer is reserved for depositing lithium metal, etc. while ensuring that the negative electrode plate effectively supports the coated region of the positive electrode plate, which facilitates maintaining a higher energy density.

In some embodiments, the foam metal layer includes a first edge and a second edge distributed in the first direction, and a third edge and a fourth edge distributed in the second direction, the first direction and the second direction are perpendicular to each other and are both perpendicular to the thickness direction of the foam metal layer; the filled region includes a first filled region and a second filled region, the filler of the first filled region extends continuously from the first edge to the second edge, and the filler of the second filled region extends continuously from the third edge to the fourth edge. In this design, the filler of the first filled region extends continuously from the first edge to the second edge, and the filler of the first filled region can improve the stretch resistance of the foam metal layer in the first direction; and the filler of the second filled region extends continuously from the third edge to the fourth edge, and the filler of the first filled region can improve the stretch resistance of the foam metal layer in the second direction. Through cooperation between the filler in the first filled region and the filler in the second filled region, the phenomenon that the negative electrode plate as a whole deforms under a pulling force can be improved, and further the problem that the electrode assembly is easily deformed is alleviated.

In some embodiments, in the thickness direction of the foam metal layer, the dimension of the foam metal layer is H1, and the thickness of the filler of a single filled region is H2, H2/H1=(0.95-1). In this design, the thickness of the filler in a single filled region is close to or equal to the thickness of the foam metal layer, so that the filler can perform supporting basically in the entire thickness of the foam metal layer, thereby making the negative electrode plate have better pressure bearing capacity, which can better alleviate the problem that the electrode assembly is easily deformed.

In the thickness direction of the foam metal layer, two opposite side surfaces of the filler are of an insulation material, and cover the opposite two side surfaces of the foam metal layer. In this design, two side surfaces of the filler in the thickness direction are of an insulation material, and cover the surfaces of the foam metal layer, which can avoid the increase of local expansion force caused by the deposition of lithium metal, etc. on the surfaces of the filler

The filler is a polymer. Optionally, the filler is a rubber material. Optionally, the rubber material includes one or more selected from the group consisting of natural rubber, styrene-butadiene rubber, butadiene rubber, isoprene rubber, neoprene, butyl rubber, nitrile rubber and silicone rubber. In this design, a specific type of the filler is selected to facilitate filling during the manufacturing process and to facilitate forming an insulating surface.

In a second aspect, the present application discloses an electrode assembly, including a positive electrode plate, a separator and the negative electrode plate in the above embodiments, wherein in the thickness direction of the foam metal layer, the projection of the filler at least partially overlaps with the projection of a coated region of the positive electrode plate.

In a third aspect, the present application provides a battery cell, including a housing and at least one electrode assembly in the above embodiments, wherein the at least one electrode assembly is accommodated in the housing.

In a fourth aspect, the present application provides a battery, including a box body and multiple battery cells in the above embodiments, wherein the multiple battery cells are accommodated in the box body.

In a fifth aspect, the present application provides an electric device, including at least one battery cell in the above embodiments.

In a sixth aspect, the present application provides a manufacturing method of a negative electrode plate, including filling a filler in pores of at least one partial region of the foam metal layer to form a filled region, wherein the filler is configured to have a projection, in the thickness direction of the foam metal layer, at least partially overlapping with the projection of a coated region of the positive electrode plate.

In the technical solution of the embodiment of the present application, the negative electrode plate in the above embodiments can be manufactured, thereby alleviating the problem that the electrode assembly is easily deformed.

In a seven aspect, the present application provides a manufacturing device of a negative electrode plate, including a providing device configured for providing a foam metal layer; and a filling device configured for filling a filler in pores of at least one partial region of the foam metal layer to form a filled region, wherein the filler is configured to have a projection, in the thickness direction of foam metal layer, at least partially overlapping with the projection of a coated region of the positive electrode plate.

In the technical solution of the embodiment of the present application, the negative electrode plate in the above embodiments can be manufactured, thereby alleviating the problem that the electrode assembly is easily deformed.

The above description is only an overview of the technical solution of the present application. In order to better understand the technical means of the present application, it may be implemented according to the contents of the description, and in order to make the above and other purposes, features and advantages of the present application more obvious and understandable, embodiments of the present application are specifically listed below.

### Brief Description of Drawings

Various other advantages and benefits will become apparent to those of ordinary skill in the art upon reading the following detailed description of the preferred embodiments. The drawings are only for the purpose of illustrating the preferred embodiments and are not to be considered as limiting the present application. Also, the same reference numerals are used to denote the same components throughout the drawings. In the drawings:
FIG. 1 is a structural schematic view of a vehicle provided in some embodiments of the present application;
FIG. 2 is an exploded view of a battery provided in some embodiments of the present application;
FIG. 3 is an exploded view of a battery cell shown in FIG. 2.
FIG. 4 is a structural schematic view of a first kind of an electrode assembly provided in some embodiments of the present application;
FIG. 5 is a sectional schematic view of a positive electrode plate provided in some embodiments of the present application in a direction perpendicular to the second direction;
FIG. 6 is a structural schematic top view of a positive electrode plate provided in some embodiments of the present application;
FIG. 7 is a structural schematic top view of a first design of a negative electrode plate provided in some embodiments of the present application;
FIG. 8 is a sectional schematic view of a first design of a negative electrode plate provided in some embodiments of the present application in a direction perpendicular to the second direction;
FIG. 9 is a structural schematic view of a second kind of an electrode assembly provided in some embodiments of the present application;
FIG. 10 is a structural schematic view of a third kind of an electrode assembly provided in some embodiments of the present application;
FIG. 11 is a structural schematic top view of a second design of a negative electrode plate provided in some embodiments of the present application;
FIG. 12 is a structural schematic top view of a third design of a negative electrode plate provided in some embodiments of the present application;
FIG. 13 is a structural schematic top view of a fourth design of a negative electrode plate provided in some embodiments of the present application;
FIG. 14 is a process flow chart of a manufacturing method of a negative electrode plate provided in some embodiments of the present application; and
FIG. 15 is a structural schematic view of a negative electrode plate provided in some embodiments of the present application.

Reference numerals in the specific embodiment are as follows:
vehicle 1000;
battery 100, controller 200, motor 300;
box body 10, first part 11, second part 12, accommodation space 13;
battery cell 20, housing 21, electrode assembly 22, electrode terminal 23, pressure relief structure 24;
casing 211, cover body 212, sealed space 213, negative electrode plate 221, positive electrode plate 222, separator 223;
foam metal layer 2211, unfilled region 22110, filled region 22111, negative electrode body 22112, negative electrode tab 22113, first edge 22114, second edge 22115, third edge 22116, fourth edge 22117, first filled region 22111a, second filled region 22111b;
coated region 2221 of positive electrode plate, current collector 2222 of positive electrode plate;
manufacturing device 2000 of negative electrode plate;
providing device 2100; filling device 2200;
thickness direction A of foam metal layer; first direction B; second direction C.

### Detailed Description of Embodiments

Embodiments of the technical solutions of the present application will be described in detail below in conjunction with the drawings. The following embodiments are only used to illustrate the technical solutions of the present application more clearly, and therefore are only examples, rather than limiting the protection scope of the present application.

Unless otherwise defined, all technical and scientific terms used herein have the same meaning as commonly understood by those skilled in the technical field of the present application. The terms used herein are only for the purpose of describing embodiments, and are not intended to limit the present application. Terms "comprising" and "having" and any variations thereof in the specification and claims of the present application and the above description of the drawings are intended to cover a non-exclusive inclusion.

In the description of the embodiments of the present application, technical terms such as "first" and "second" are only used to distinguish different objects, and should not be understood as indicating or implying importance in relativity or implicitly indicating the number, specific sequence, or primary-subordinate relationship of the indicated technical features.

In the description of the embodiments of the present application, the orientation or positional relationship indicated by technical terms "length", "width", "thickness", "upper", "lower", "inner", "outer", etc. are based on orientation or positional relationship shown in the drawings, only for the convenience of describing the embodiments of the present application and simplifying the description, rather than indicating or implying that the device or element referred to must have a specific orientation, or be constructed and operated in a specific orientation, and therefore cannot be understood as a limitation on the embodiments of the present application.

Reference made herein to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In the embodiments of the present application, the same reference numerals represent the same components, and for the sake of brevity, in different embodiments, detailed descriptions of the same components are omitted. It should be understood that the thickness, length, width and other dimensions of the various components in the embodiments of the application shown in the drawings, as well as the overall thickness, length, width, and other dimensions of the integrated device, are for illustrative purposes only, and should not constitute any limitation to the present application.

In the present application, the battery cell may include lithium-ion secondary battery, lithium-ion primary battery, lithium sulphur battery, sodium lithium-ion battery, sodium ion battery or magnesium ion battery etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive collector coated with the positive electrode active material layer, and the positive current collector not coated with the positive electrode active material layer is used as the positive electrode tab. Taking a lithium-ion battery cell as an example, the material of the positive current collector may be aluminium, and the positive electrode active material may be lithium cobaltate, lithium iron phosphate, ternary lithium, or lithium manganate, etc. The material of the separator may be PP (polypropylene) or PE (polyethylene), etc. In addition, the electrode assembly may be in a winding structure or may be in a laminated/stacked structure, which is not limited in the embodiments of the present application.

In the present application, a battery refers to a single physical module that includes one or more battery cells to provide higher voltage and capacity. For example, the battery mentioned in the present application may include a battery module or a battery pack, and the like. The battery generally includes a box body for packaging one or more battery cells. The box body may prevent a liquid or other foreign object from affecting the charging or discharging of the battery cells.

At present, from the perspective of the development of the market situation, the application of power batteries is becoming more and more extensive. Power batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of power battery application fields, its market demand is also constantly increasing.

The applicant noticed that in some existing electrode assembly design, in order to reserve enough space for the deposition of metal lithium etc. and simultaneously reduce the consumption of metal, the selected foam metal generally has higher porosity, for example ≥70%, which results in lower pressure resistance of the foam metal. The occurrence of the following situations usually causes the foam metal to be compressed to lead to that the structure collapses, which in turn leads to deformation of the electrode assembly. In the first situation, during manufacturing of the electrode assembly, the winding process and the stacking process may cause the foam metal to be compressed by the coated region of the positive electrode plate. In the second situation, during rapid charging, the metal is excessively deposited on the surface of the foam metal, resulting in an increase in the expansion force, wherein the structure of the foam metal may be easily crushed after the expansion force increases. In the third situation, there is an impact force on the electrode assembly outside the electrode assembly.

In order to solve the above problems, currently proposed solutions include optimization of a charging and discharging strategy and using of a casing with high mechanical strength. The optimization of the charging and discharging strategy mainly solves the problem brought about by the second situation, and the using of the casing with high mechanical strength mainly solves the problem brought about by the third situation. The problem brought about by the first situation is not solved, rendering that the foam metal is still easy to have structure collapsed which causes that the electrode assembly deforms.

Based on the above consideration, the inventors designed a negative electrode plate through in-depth researches, wherein at least one part of the foam metal of the negative electrode plate is provided with a filled region, and a filler is filled in pores of the filled region, on the basis of which the filled region is provided in a position of the foam metal layer such that it can at least partially overlap with the coated region of the positive electrode plate, wherein since the filled region has high compactness and good supporting function, the filled region can be used to improve the pressure bearing capacity of the foam metal layer and improve the phenomenon that the foam metal deforms under a pressure, thus alleviating the problem that the electrode assembly is easily deformed.

The technical solution described in the embodiments of the present application is applicable to a negative electrode plate, an electrode assembly using the negative electrode plate, a battery cell using the electrode assembly, a battery using the battery cell, an electric device using the battery cell, and a manufacturing method and device for the negative electrode plate.

**In** the present application, the electric device may be in various forms, for example, mobile phone, portable device, laptop, electric power cart, electric vehicle, ship, spacecraft, electric toy and electric tool, etc. For example, the spacecraft includes airplane, rocket, space shuttle and space ship, etc. The electric toy includes fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc.

In the following embodiments, for convenience of description, description is made by taking, as an example, an electric device according to an embodiment of the present application being a vehicle 1000.

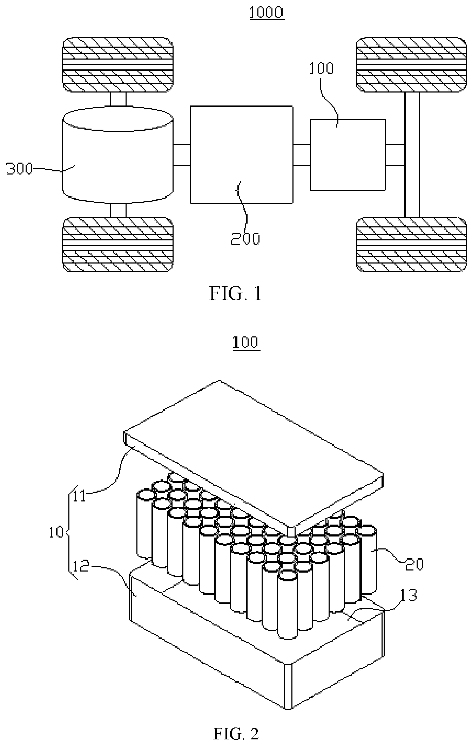

Referring to FIG. 1, FIG. 1 is a structural schematic view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000. The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

Referring to FIG. 2, FIG. 2 is an exploded view of a battery 100 provided in some embodiments of the present application. The battery 100 may include a box body 10 and battery cells 20, and the battery cells 20 are accommodated in the box body 10. In the above, the box body 10 is used for accommodating the battery cells 20, and the box body 10 may be in various structures. In some embodiments, the box body 10 may include a first part 11 and a second part 12, the first part 11 and the second part 12 cover each other, and the first part 11 and the second part 12 together define an accommodation space 13 for accommodating the battery cells 20. The second part 12 may be in a hollow structure with one end open, the first part 11 is in a plate-shaped structure, and the first part 11 covers the opening side of the second part 12 to form the box body 10 with the accommodation space 13. The first part 11 and the second part 12 may also each be in a hollow structure with one side open, and the opening side of the first part 11 covers the opening side of the second part 12 to form the box body 10 with the accommodating space 13. Of course, the first part 11 and the second part 12 may be in various shapes, such as a cylinder, a cuboid and so on.

In the battery 100, there may be one or multiple battery cells 20. If there are multiple battery cells 20, the multiple battery cells 20 may be in serial, parallel or hybrid connection with each other. The hybrid connection means that the multiple battery cells 20 are connected with each other both in series and in parallel. The multiple battery cells 20 can be directly in serial, in parallel or in hybrid connection with each other, and then the whole composed of the multiple battery cells 20 is accommodated in the box body 10. It is also possible that the multiple battery cells 20 are first in serial or in parallel or in hybrid connection with each other to form battery 100 modules, and then the multiple battery 100 modules are in serial or in parallel or in hybrid connection with each other to form a whole, and accommodated in the box body 10. The battery 100 may also include other structures, for example, the multiple battery cells 20 may be electrically connected with each other through a bus component, so as to realize parallel connection, serial connection or hybrid connection of multiple battery cells 20.

In the above, each battery cell 20 may be a secondary battery or a primary battery. It may also be a lithium-sulphur battery, a sodium-ion battery or a magnesium-ion battery, but is not limited thereto. The battery cell may be in a shape of cylinder, flat body, cuboid or in other shape, etc.

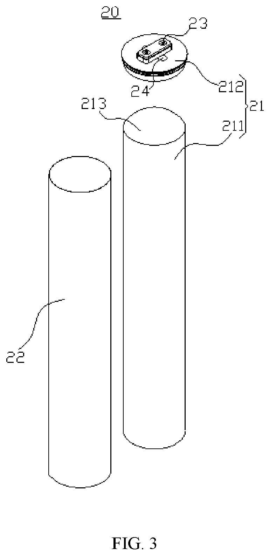

Referring to FIG. 3, FIG. 3 is an exploded view of the battery cell 20 shown in FIG. 2. The battery cell 20 refers to the smallest unit constituting the battery 100. As shown in FIG. 3, the battery cell 20 may include a housing 21 and at least one electrode assembly 22, with the at least one electrode assembly 22 accommodated in the housing 21. In some embodiments, the housing 21 may also be used to accommodate an electrolyte, such as electrolytic solution. The housing 21 may be in various structural forms.

The housing 21 may include a casing 211 and a cover body 212.

The casing 211 is an assembly for cooperating with the cover body 212 to form an internal sealed space 213 of the battery cell 20, wherein the formed sealed space 213 may be used to accommodate the electrode assembly 22, electrolytic solution and other components. The casing 211 and the cover body 212 may be independent components, and the casing may be provided with an opening, wherein the internal environment of the battery cell 20 may be formed by making the cover body 212 cover the opening at the opening. Without limitation, the cover body 212 and the casing 211 may also be integral. Specifically, the cover body 212 and the casing 211 may form a common connecting surface before other components enter the casing, and when needing to package the interior of the casing 211, the cover body 212 is made to cover the casing 211. The casing 211 may be in various shapes and various dimensions, such as cuboid, cylinder, hexagonal prism, and so on. Specifically, the shape of the casing 211 may be determined according to the specific shape and dimension of the electrode assembly 22. The casing 211 may be made of various materials, such as copper, iron, aluminium, stainless steel, aluminium alloy, plastic, etc., which is not specially limited in this embodiment of the present application.

The cover body 212 refers to a component that covers the opening of the casing 211 to isolate the internal environment of the battery cell 20 from the external environment. Without limitation, the shape of the cover body 212 may be adapted to the shape of the casing 211 to cooperate with the casing 211. In some embodiments, the cover body 212 may be made of a material with certain hardness and strength (such as aluminium alloy), so that the cover body 212 is not easy to be deformed when being pressed and collided, enabling that the battery cell 20 has higher structural strength and also improved safety performance. The material of the cover body 212 may also be other material, such as copper, iron, aluminium, stainless steel, aluminium alloy, plastic, etc., which is not specially limited in this embodiment of the present application. In some embodiments, the inner side of the cover body 212 may be provided with an insulation member, and the insulation member may be used to isolate the electrical connection components in the casing 211 from the cover body 212 to reduce the risk of short circuit. Exemplarily, the insulation member may be plastic, rubber, or the like.

The cover body 212 may be provided thereon with functional components such as electrode terminal 23. The electrode terminal 23 is mounted on the cover body 212. The electrode terminal 23 is electrically connected with the electrode assembly 22 to output the electric energy generated by the battery cell 20. Exemplarily, the electrode terminal 23 may be electrically connected with the electrode assembly 22 through an adapter plate (not shown in the figures).

The battery cell 20 may further include a pressure relief structure 24, wherein the pressure relief structure 24 is used for releasing the pressure inside the battery cell 20 when the internal pressure or temperature of the battery cell 20 reaches a predetermined value. Exemplarily, the pressure relief structure 24 may be a component such as an explosion-proof valve, a burst disk, a gas valve, a pressure relief valve, or a safety valve, etc.

When assembling the battery cell 20, the electrode assembly 22 may be placed inside the casing 211 first, and electrolyte is filled into the casing 211, and then the cover body 212 covers the opening of the casing 211.

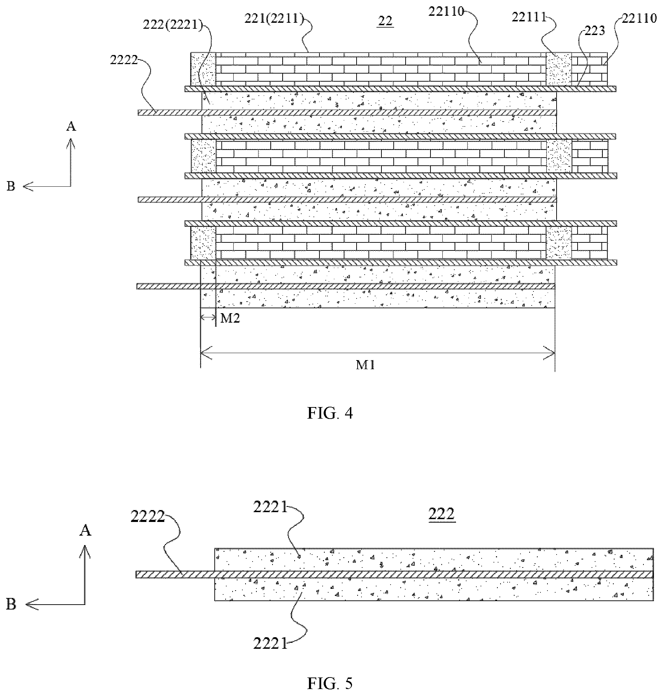

Referring to FIG. 4, FIG. 4 is a structural schematic view of a first kind of an electrode assembly 22 provided in some embodiments of the present application. The electrode assembly 22 is a component, in the battery cell 20, where electrochemical reactions occur. The casing 211 may contain one or more electrode assemblies 22. The electrode assembly 22 is mainly formed by winding or stacking the positive electrode plate 222 and the negative electrode plate 221, and a separator 223 is provided between the positive electrode plate 222 and the negative electrode plate 221.

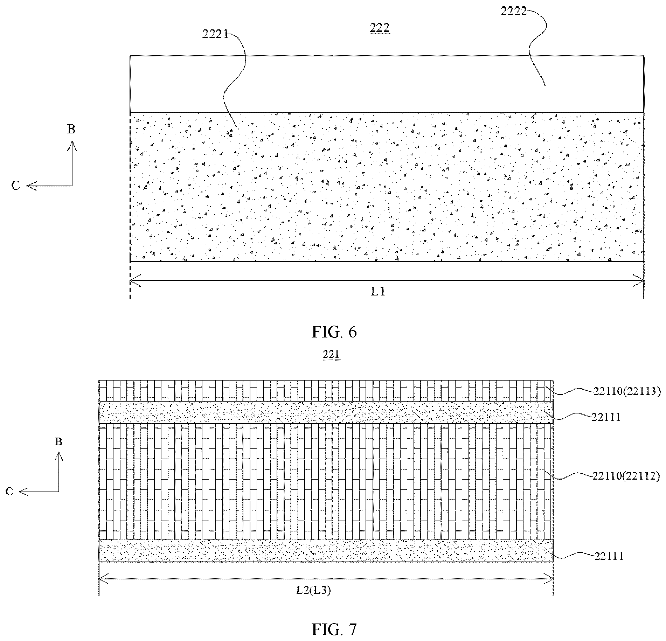

Referring to FIG. 5 and FIG. 6, FIG. 5 and FIG. 6 are structural schematic views of a positive electrode plate 222 provided in some embodiments of the present application. The coated region 2221 of the positive electrode plate is located at the surface of the current collector 2222 of the positive electrode plate distributed in the thickness direction. The material coated on the region includes positive electrode active material, for example, it consists of the positive electrode active material.

Next, the specific structure of the negative electrode plate 221 will be described in detail in conjunction with the drawings.

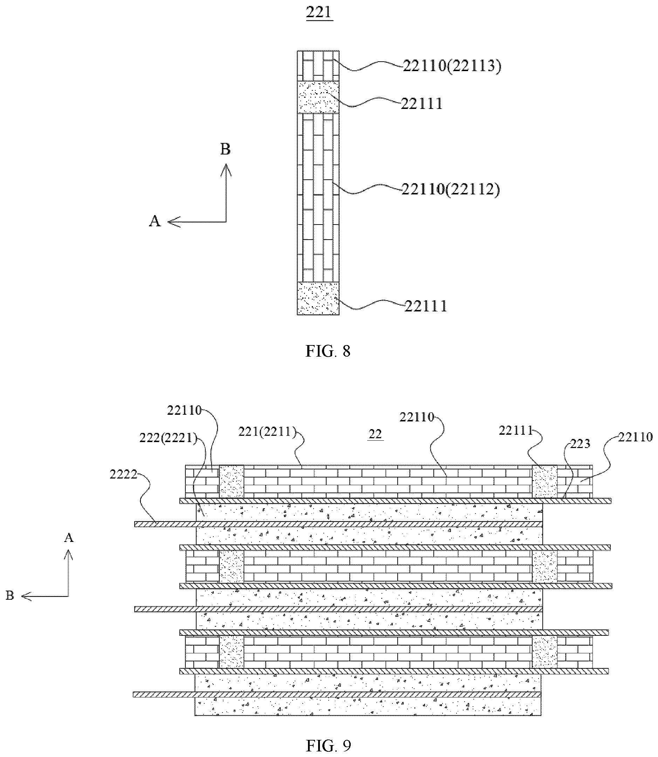

In the first aspect, according to some embodiments of the present application, referring to FIG. 4 to FIG. 8, FIG. 7 is a schematic structural top view of a first design of the negative electrode plate 221 provided in some embodiments of the present application, and FIG. 8 is a schematic sectional view of a first design of the negative electrode plate 221 provided in some embodiments of the present application in a direction perpendicular to the second direction C. The present application provides a negative electrode plate 221. The negative electrode plate 221 includes a foam metal layer 2211, at least one part of the foam metal layer 2211 is a filled region 22111, pores of the filled region 22111 are filled with a filler, and the filler is configured to have a projection, in the thickness direction A of the foam metal layer, at least partially overlapping with the projection of a coated region 2221 of the positive electrode plate.

The negative electrode plate 221 includes a foam metal layer 2211, meaning that the negative electrode plate 221 uses the foam metal layer 2211 as a base, and other structures other than the foam metal layer 2211 may be provided according to design requirements. The negative electrode plate 221 is a porous metal electrode, and two side surfaces of the foam metal layer 2211 distributed in the thickness direction A of the foam metal layer may not be coated with the negative electrode active material.

The foam metal layer 2211 refers to a layered metal porous body having pores there inside, with the porosity thereof being optionally 20-95%, and further optionally 60-95%.

A part of the foam metal layer 2211 is the filled region 22111, that is, the foam metal layer 2211 further includes an unfilled region 22110, and the pores in the unfilled region 22110 are used for depositing a metal such as lithium.

The pores of the filled region 22111 are filled with a filler, and its porosity is smaller than that of the unfilled region 22110 in the foam metal layer 2211. The distribution of the filled region 22111 in the foam metal layer 2211 is not limited, and the number thereof may be one or more. When multiple filled regions 22111 are provided, in terms of distribution uniformity, the multiple filled regions 22111 can be uniformly or non-uniformly distributed; and in terms of arrangement direction, any two filled regions 22111 may be distributed spacedly in the thickness direction A of the foam metal layer, or also may be distributed spacedly in a direction perpendicular to the thickness direction A of the foam metal layer.

The filler is a substance filled in the pores of the foam metal layer 2211, which may be composed of one material, or may include multiple materials.

In the thickness direction A of the foam metal layer, the filled region 22111 is configured to have a projection at least partially overlapping with the projection of the coated region 2221 of the positive electrode plate, referring to FIG. 4. That is, in the electrode assembly 22, in the thickness direction A of the foam metal layer, the projection of the filled region 22111 partially or fully overlaps with the projection of the coated region 2221 of the positive electrode plate.

In the technical solution of the embodiment of the present application, a part of the foam metal layer 2211 is provided as the filled region 22111. Since the pores of the filled region 22111 are filled with the filler, the filled region 22111 has high compactness and good supporting effect, enabling better pressure bearing capacity of the foam metal layer 2211. Based on that foam metal layer 2211 is provided with the filled region 22111, the filled region 22111 is configured to be at least partially stacked with the coated region 2221 of the positive electrode plate. When the negative electrode plate 221 and the positive electrode plate 222 are stacked to make the electrode assembly 22, the negative electrode plate 221 can better bear the pressure from the positive electrode plate 222, and can improve the phenomenon that the negative electrode plate 221 is deformed under pressure, thereby alleviating the problem that the electrode assembly 22 is easily deformed.

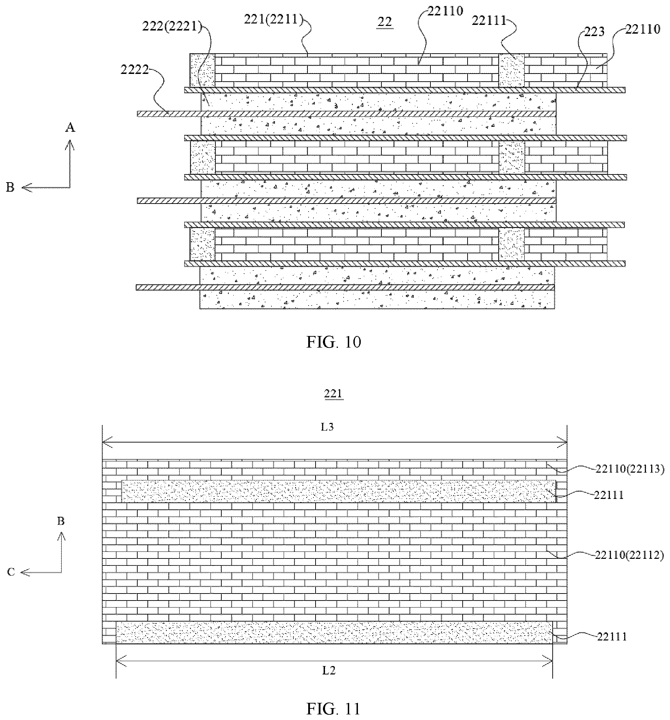

Referring to FIG. 4, FIG. 9 and FIG. 10, FIG. 9 is a structural schematic view of a second kind of an electrode assembly provided in some embodiments of the present application; and FIG. 10 is a schematic structural view of a third kind of an electrode assembly provided in some embodiments of the present application. According to some embodiments of the present application, according to the first aspect, the first example of the first aspect is proposed, wherein in the thickness direction A of the foam metal layer, the projection of at least one end of the coated region 2221 of the positive electrode plate in a first direction B overlaps with the projection of the filler, and the first direction B is perpendicular to the thickness direction A of the foam metal layer.

As an example, as shown in FIG. 4, projections of the two ends of the coated region 2221 of the positive electrode plate in the first direction B overlap with the projections of the filled regions 22111 respectively; and as shown in FIG. 9 and FIG. 10, the projection of each end of the coated region 2221 of the positive electrode plate in the first direction B overlaps with the projection of the filler of one filled region 22111.

In this design, in the thickness direction A of the foam metal layer, the filled region 22111 is configured to be stacked with the end of the coated region 2221 of the positive electrode plate in the first direction B, enabling it to support the end of the coated region 2211 of the positive electrode plate in the first direction B through the filled region 22111, and ensuring that the negative electrode plate 221 better bears the pressure of the coated region 2221 of the positive electrode plate.

Continuing to refer to FIG. 4, FIG. 9 and FIG. 10, the foam metal layer 2211 includes a negative electrode body 22112 and a negative electrode tab 22113, the negative electrode body 22112 and the negative electrode tab 22113 are distributed in the first direction B, each of the two ends of the negative electrode body 22112 opposite to each other in the first direction B has the filled region 22111, and the first direction B is perpendicular to the thickness direction A of the foam metal layer.

The negative electrode body 22112 refers to the filled regions 22111 in the foam metal layer 2211 distributed in the first direction B and the metal porous body region between the filled regions. Two ends of the negative electrode body 22112 in the first direction B are provided as the filled regions 22111. In the foam metal layer 2211, the negative electrode body 22112 and the negative electrode tab 22113 are divided by the filler of the filled regions 22111, and the negative electrode tab 22113 refers to the metal porous body region, in the foam metal layer 2211, extending from the filled region 22111 to the side away from the negative electrode body 22112 in the first direction B.

According to the invention, each of the two ends of the negative electrode body 22112 in the first direction B has the filled region 22111, enabling that the two ends of the negative electrode body 22112 in the first direction B both can better bear the pressure of the coated region 2221 of the positive electrode plate. Meanwhile, the filled regions 22111 at two ends of the negative electrode body 22112 make it convenient to realize stacking with the two ends of the coated region 2221 of the positive electrode plate respectively, enabling the entire negative electrode plate 221 to better bear the pressure of the coated region 2221 of the positive electrode plate.

Referring to FIG. 7 and FIG. 10, according to some embodiments of the present application, according to the first example of the first aspect or the second example of the first aspect, a third example of the first aspect is proposed, wherein the filler is continuously arranged in a second direction C, and the second direction C is perpendicular to the first direction B and the thickness direction A of the foam metal layer.

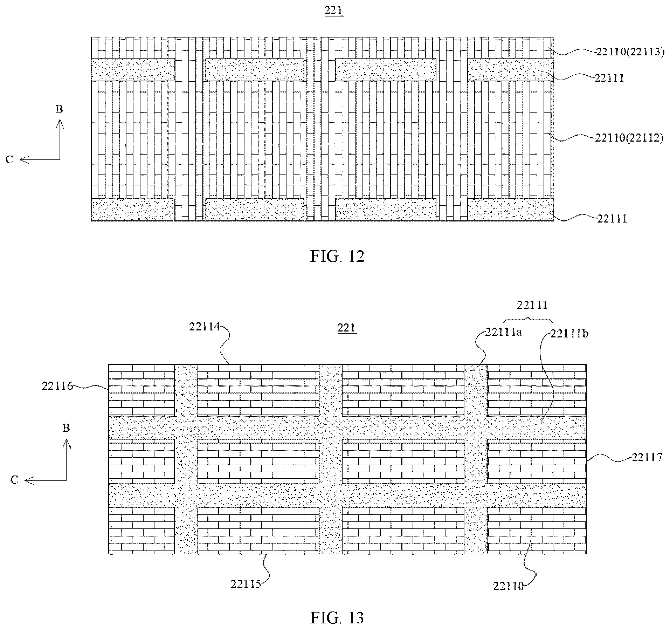

The filler is arranged continuously in the second direction C, which means that there are no gaps in the filler in the second direction C, and in the filler, there are no through holes communicating two sides thereof in the first direction B, as shown in FIG.7 and FIG. 11. Certainly, in other embodiments, the fillers may also be arranged spacedly in the second direction C, as shown in FIG 12

In this design, the filler is continuously provided in the second direction C, so that the filler has a larger distribution range in the second direction C, and thus the negative electrode plate 221 as a whole can better bear the pressure of the coated region 2221 of the positive electrode plate.

Referring FIG. 6, FIG. 7 and FIG. 11, according to some embodiments of the present application, according to the third example of the first aspect, the fourth example of the first aspect is proposed, wherein in the second direction C, the dimension of the coated region 2221 of the positive electrode plate is L1, and the dimension of the filler of a single filled region 22111 is L2, L1≤L2.

In this design, the filler is provided such that the dimension thereof in the second direction C is not lower than that of the coated region 2221 of the positive electrode plate, enabling that the filler can be stacked with the coated region 2221 of the whole positive electrode plate in the second direction C, and ensuring that the negative electrode plate 221 can better support the coated region 2221 of the whole positive electrode plate 221.

Referring to FIG. 7, according to some embodiments of the present application, according to the third example of the first aspect or the fourth example of the first aspect, a fifth example of the first aspect is proposed, wherein in the second direction C, the dimension of the foam metal layer 2211 is L2, L2=L3.

Certainly, in other embodiments, it may be configured as L2 < L3, as shown in FIG. 11.

In this design, the filler is provided such that the dimension thereof in the second direction C is equal to the dimension of the foam metal layer 2211 in the second direction C. That is, in the second direction C, the filler continuously extends from one end of the foam metal layer 2211 to the other end. On the one hand, the filler can improve the stretch resistance of the foam metal layer 2211 in the second direction C, improving the phenomenon that the negative electrode plate 221 deforms under a pulling force and further alleviating the problem that the electrode assembly 22 is easily deformed; and on the other hand, the filler has the effect of partitioning, wherein in the case that each of the two ends of the negative electrode body 22112 in the first direction B is provided with the filled region 22111, the filled regions 22111 at the two ends are beneficial to prevent metal particles at the outer side from entering the interior of the negative electrode body 22112. This effectively avoids the problems such as short circuit and thermal failure in subsequent cycles caused by the metal particles entering the interior of the negative electrode body 22112.

Continuing to refer to FIG. 4, according to some embodiments of the present application, according to any one of the first example of the first aspect to the fifth example of the first aspect, the sixth example of the first aspect is proposed, wherein in the first direction B, the dimension of the coated region 2221 of the positive electrode plate is M1, and the dimension of the overlapping region of the projection of the filler of a single filled region 22111 in the thickness direction A of the foam metal layer and the projection of the coated region 2221 of the positive electrode plate in the thickness direction A of the foam metal layer is M2, M2/M1≥3%.

**In** this design, the ratio of the dimension of the overlapping region of the filler of the single filled region 22111 and the coated region 2221 of the positive electrode plate in the first direction B to the dimension of the coated region 2221 of the positive electrode plate is controlled at a standard of ≥ 3%, ensuring that the negative electrode plate 221 reliably supports the coated region 2221 of the positive electrode plate.

Continuing to refer to FIG. 4, according to some embodiments, according to the sixth example of the first aspect, the seventh example of the first aspect is proposed, wherein M2/M1≤10%.

As an example, the value of M2/M1 is for example, but not limited to any one or a range value between any two of 3%, 4%, 5%, 6%, 7%, 8%, 9% and 10%.

**In** this design, the ratio of the dimension of the overlapping region of the filler in the single filled region 22111 and the coated region 2221 of the positive electrode plate in the first direction B to the dimension of the coated region 2221 of the positive electrode plate is controlled at a standard of ≤ 10%, ensuring that a large range of unfilled region 22110 in the foam metal layer 2211 is reserved for depositing lithium metal, etc. while ensuring that the negative electrode plate 221 effectively supports the coated region 2221 of the positive electrode plate, facilitating maintaining a higher energy density.

Referring to FIG. 13, according to some embodiments of the present application, according to the first aspect, the eighth example of the first aspect is proposed, wherein the foam metal layer 2211 includes a first edge 22114 and a second edge 22115 distributed in the first direction **B,** and a third edge 22116 and a fourth edge 22117 distributed in the second direction C, the first direction B and the second direction C are perpendicular to each other and are both perpendicular to the thickness direction A of the foam metal layer; the filled region 22111 includes a first filled region 22111a and a second filled region 22111b, the filler of the first filled region 22111a extends continuously from the first edge 22114 to the second edge 22115, and the filler of the second filled region 22111b extends continuously from the third edge 22116 to the fourth edge 22117.

As an example, the filler of the first filled region 22111a extends in the first direction **B,** the filler of the second filled region 22111b extends in the second direction C, and the filler of the first filled region 22111a and the filler of the second filled region 22111b intersects perpendicularly.

**In** this design, the filler in the first filled region 22111a extends continuously from the first edge 22114 to the second edge 22115, and the filler of the first filled region 22111a can improve the stretch resistance of the foam metal layer 2211 in the first direction B; and the filler of the second filled region 22111b extends continuously from the third edge 22116 to the fourth edge 22117, and the filler of the first filled region 22111a can improve the stretch resistance of the foam metal layer 2211 in the second direction C. Through cooperation between the filler in the first filled region 22111a and the filler in the second filled region 22111b, the phenomenon that the negative electrode plate 221 as a whole deforms under a pulling force can be improved, and further the problem that the electrode assembly 22 is easily deformed is alleviated.

Continuing to refer to FIG. 8, according to some embodiments of the present application, according to any one of the first aspect, and the first example of the first aspect to the eighth example of the first aspect, the ninth example of the first aspect is proposed, wherein in the thickness direction A of the foam metal layer, the dimension of the foam metal layer 2211 is H1, and the thickness of the filler of the single filled region 22111 is H2, H2/H1=(0.95-1).

In the above, H2/H1 is for example, but not limited to any oneor a range value between any two of 0.95, 0.96, 0.97, 0.98, 0.99 and 1.

In this design, the thickness of the filler in a single filled region 22111 is close to or equal to the thickness of the foam metal layer 2211, so that the filler can perform supporting basically in the entire thickness of the foam metal layer 2211, thereby making the negative electrode plate 221 have better pressure bearing capacity, which can better alleviate the problem that the electrode assembly 22 is easily deformed.

In the thickness direction A of the foam metal layer, the two opposite side surfaces of the filler are of an insulation material, and cover the two opposite side surfaces of the foam metal layer 2211.

The two opposite side surfaces of the filler are of an insulation material, meaning that the two opposite side surfaces of the filler are insulated. In the above, the entire filled region 22111 may use the insulation material as the filler, so that the entire filler of the filled region 22111 is insulated. The filled region 22111 may also use the insulation material as the filler for only the two side surfaces, and the region between the two side surfaces may use insulating or non-insulating filler.

The two opposite side surfaces of the filler are of the insulation material and cover the two opposite side surfaces of the foam metal layer 2211. That is, the filler forms a corresponding insulation region at the surface of the foam metal layer 2211. As an example, in the thickness direction A of the foam metal layer, the thickness of the filled region 22111 is substantially same as the thickness of the foam metal layer 2211, and the thickness of the filler covering the foam metal layer 2211 is reduced as much as possible in the case of ensuring that the filler covers the surface of the foam metal layer 2211.

According to the invention, two side surfaces of the filler in the thickness direction are of an insulation material, and cover the surfaces of the foam metal layer 2211, which can avoid the increase of local expansion force caused by the deposition of lithium metal, etc. on the surfaces of the filler.

The filler is a polymer. Optionally, the filler is a rubber material. Optionally, the rubber material includes one or more of natural rubber, styrene-butadiene rubber, butadiene rubber, isoprene rubber, neoprene, butyl rubber, nitrile rubber, and silicone rubber.

In this design, a specific type of filler is selected to facilitate filling during the manufacturing process and to facilitate forming an insulating surface.

Referring to FIG. 4, FIG. 9 and FIG. 10, in a second aspect, the present application discloses an electrode assembly 22, including a positive electrode plate 222, a separator 223 and the negative electrode plate 221 in the above embodiments, wherein in the thickness direction A of the foam metal layer, the projection of the filler at least partially overlaps with the projection of a coated region 2221 of the positive electrode plate.

In the present application, the electrode assembly 22 may be designed and configured according to the battery 100, and the electrode assembly 22 with tab being led out from two sides is shown in the drawings. In other embodiments, the electrode assembly 22 may be designed in the form of the tab being led out from a single side.

The present application provides a battery cell 20, including a housing 21 and at least one electrode assembly 22 in the above embodiments, wherein the at least one electrode assembly 22 is accommodated in the housing 21.

In a further aspect, the present application provides a battery 100, including a box body 10 and multiple battery cells 20 in the above embodiments, wherein the multiple battery cells 20 are accommodated in the box body 10.

In a further aspect, the present application provides an electric device, including at least one battery cell 20 in the above embodiments.

According to the invention, the present application provides a manufacturing method according to claim 14.

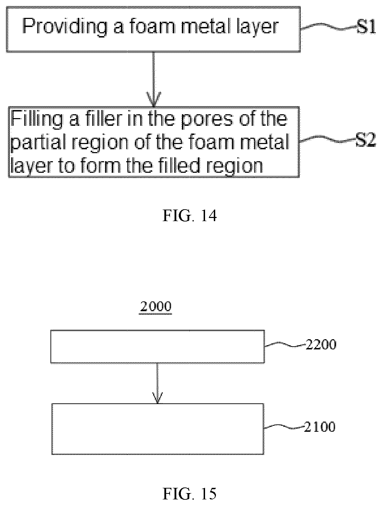

Referring to FIG. 14, the manufacturing method of the negative electrode plate 221 has the following process flows.

S1, providing a foam metal layer 2211.

S2, filling a filler in the pores of the partial region of the foam metal layer 2211 to form the filled region 22111.

In the technical solution of the embodiment of the present application, the negative electrode plate 221 in the above embodiments can be manufactured, thereby alleviating the problem that the electrode assembly 22 is easily deformed.

FIG.15 shows **a** manufacturing device 2000 of a negative electrode plate, including a providing device 2100 configured for providing a foam metal layer 2211; and a filling device 2200 configured for filling a filler in pores of a partial region of the foam metal layer 2211 to form a filled region 22111, wherein the filler is configured to have a projection, in the thickness direction A of the foam metal layer, at least partially overlapping with the projection of a coated region 2221 of the positive electrode plate.

In the technical solution of the embodiment of the present application, the negative electrode plate 221 in the above embodiments can be manufactured, thereby alleviating the problem that the electrode assembly 22 is easily deformed.

The foam metal layer 2211 includes a negative electrode body 22112 and a negative electrode tab 22113, the negative electrode body 22112 and the negative electrode tab 22113 are distributed in the first direction B, and each of the two ends of the negative electrode body 22112 opposite to each other in the first direction B has the filled region 22111. In the thickness direction A of the foam metal layer, the projections of the filled regions 22111 of the two ends of the negative electrode plate 22112 in the first direction B respectively overlap with the two ends of the coated region 2221 of the positive electrode plate in the first direction B.

In the above, the filler of the filled region 22111 are provided continuously in the second direction C, L1≤L2=L3, 3%≤M2/M1≤10%. In the thickness direction A of the foam metal layer, the two opposite side surfaces of the filler of the filled region 22111 are of the insulation material and cover the two opposite side surfaces of the foam metal layer 2211. The thickness of the filler of the filled region 22111 is substantially same as the thickness of the foam metal layer 2211.

### Experimental Example

Referring to FIG. 7 and FIG. 8, preparation of the negative electrode plate 221:
The foam metal layer 2211 with a porosity of 80% is used as the base of the negative electrode plate 221, and nitrile rubber is filled in the pores of the preset region to form the filled region 22111. Referring to FIG. 7 and FIG. 8, the foam metal layer 2211 includes a negative electrode body 22112 and a negative electrode tab 22113, the negative electrode body 22112 and the negative electrode tab 22113 are distributed in the first direction B, and each of the two opposite ends of the negative electrode body 22112 in the first direction B has the filled region 22111.

The dimension of the foam metal layer 2211 in the direction A (the thickness direction A of the foam metal layer) is 200 µm; the section of the base of the foam metal layer 2211 perpendicular to the direction A is rectangular, and has a dimension of 6 cm in the direction B (first direction B) and a dimension of 4 cm in the direction C (second direction C).

The filler of the filled region 22111 is provided continuously in the second direction C, L2=L3. In the thickness direction A of the foam metal layer, the two opposite side surfaces of the filler of the filled region 22111 are of the insulation material and cover the two opposite side surfaces of the foam metal layer 2211. The thickness of the filler of the filled region 22111 is substantially same as the thickness of the foam metal layer 2211.

Referring to FIG. 5 and FIG. 6, preparation of the positive electrode plate 222:

The material of the coated region 2221 of the positive electrode plate is lithium iron phosphate.

The material of the coated region 2221 of the positive electrode plate is lithium iron phosphate, and the section of the coated region 2221 of the positive electrode plate perpendicular to the direction A is rectangular, and has a dimension of 5 cm in the direction B (first direction B) and a dimension of 4 cm in the direction C (second direction C), L1=L2.

Referring to FIG. 4, preparation of test assemblies:
The separator 223 is omitted, referring to the design manner in FIG. 4 for the negative electrode plate 221 and the positive electrode plate, one negative electrode plate 221 and one positive electrode plate 222 are stacked, and in the thickness direction A of the foam metal layer, the projections of the fillers of the filled regions 22111 of the two ends of the negative electrode plate 22112 in the first direction B respectively overlap with the projections of the two ends of the coated region 2221 of the positive electrode plate in the first direction B.

The positive electrode plate 222 are maintained unchanged, and by means of adjusting the filling position(s) of the filler in the filled region 22111, the value of M2/M1 is adjusted to obtain test assemblies of different embodiments, and the difference between the test assemblies of various embodiments only lies in the value of M2/M1.

A flat plate of 10 cm × 10 cm is used to apply a pressure of 500N on the test assemblies provided by embodiments, and the thicknesses of the negative electrode plate 221 before and after the compression are summarized to analyse the pressure deformation resistance of the negative electrode plate 221.

In the above, in various embodiments, the values of M2/M1 of the test assemblies and the thicknesses test results are as shown in Table 1.

**Table 1 Values of M2/M1 of the test assemblies and the thickness test results.**

| Item | M2/M1 (%) | Thickness test result | | |
|---|---|---|---|---|
| | | Thickness before applying the pressure | Thickness after applying the pressure | Compression amount |
| | | (µm) | (µm) | (%) |
| Example 1 | 1 | 200 | 150 | 25 |
| Example 2 | 3 | 200 | 195 | 2.5 |
| Example 3 | 6 | 200 | 198 | 1 |
| Example 4 | 10 | 200 | 200 | 0 |
| Example 5 | 15 | 200 | 200 | 0 |

It can be seen from Table 1 that after the value of M2/M1 reaches 3%, the filled region 22111 achieves a certain compactness, better playing the supporting role and thus effectively preventing pressure deformation of the negative electrode plate 221. After the value of M2/M1 rises to 6%, especially 10%, with the value of M2/M1 continuing to be increased, there is no significant improvement in the effect of preventing the negative electrode plate 221 from being deformed under pressure, and at this time, the proportion of the unfilled region 22110 become smaller, which may lead to less depositable metal in the unfilled region 22110, thus resulting in decreased energy density.

## Claims

1. A battery cell (20), comprising a housing (21) and at least one electrode assembly (22) accommodated in the housing (21), the electrode assembly (22) assembly having a positive electrode plate, a separator and a negative electrode plate, wherein the negative electrode plate (221) comprises a foam metal layer (2211),
wherein one part of the foam metal layer (2211) is a filled region (22111), and pores of the filled region (22111) are filled with a filler;
wherein in the thickness direction (A) of the foam metal layer (2211), two opposite side surfaces of the filler are of an insulation material, and cover two opposite side surfaces of the foam metal layer (2211);
wherein the filler is a polymer;
wherein the foam metal layer (2211) further includes an unfilled region (22110), and pores in the unfilled region (22110) are used for depositing a metal;
wherein in the thickness direction (A) of the foam metal layer (2211), the projection of the filler at least partially overlaps with the projection of the coated region of the positive electrode plate;
wherein the foam metal layer (2211) comprises a negative electrode body (22112) and a negative electrode tab (22113), the negative electrode body (22112) and the negative electrode tab (22113) are distributed in the first direction (B), and two opposite ends of the negative electrode body (22112) in the first direction (B) each have the filled region (22111); and
the first direction (B) is perpendicular to the thickness direction (A) of the foam metal layer (2211).

2. The battery cell (21) according to claim 1, wherein in the thickness direction (A) of the foam metal layer (2211), a projection of at least one end of the coated region (2221) of the positive electrode plate (222) in a first direction (B) overlaps with the projection of the filler; and
the first direction (B) is perpendicular to the thickness direction (A) of the foam metal layer (2211).

3. The battery cell (21) according to claim 1 or 2, wherein the filler is provided continuously in a second direction (C), and the second direction (C) is perpendicular to the first direction (B) and the thickness direction (A) of the foam metal layer (2211).

4. The battery cell (21) according to claim 3, wherein in the second direction (C), a dimension of the coated region (2221) of the positive electrode plate (222) is L1, and a dimension of the filler of the single filled region (22111) is L2, L1≤L2.

5. The battery cell (21) according to claim 3 or 4, wherein in the second direction (C), a dimension of the foam metal layer (2211) is L3, L2=L3.

6. The battery cell (21) according to any one of claims 1-5, wherein in the first direction (B), a dimension of the coated region (2221) of the positive electrode plate (222) is M1, and a dimension of an overlapping region of a projection of the filler of the single filled region (22111) in the thickness direction (A) of the foam metal layer (2211) and a projection of the coated region (2221) of the positive electrode plate (222) in the thickness direction (A) of the foam metal layer (2211) is M2, M2/M1≥3%.

7. The battery cell (21) according to claim 6, wherein M2/M1≤10%.

8. The battery cell (21) according to claim 1, wherein the foam metal layer (2211) comprises a first edge (22114) and a second edge (22115) distributed in the first direction (B), and a third edge (22116) and a fourth edge (22117) distributed in the second direction (C);
the first direction (B) and the second direction (C) are perpendicular to each other and both are perpendicular to the thickness direction (A) of the foam metal layer (2211); and
the filled region (22111) comprises a first filled region (22111a) and a second filled region (22111b), a filler of the first filled region (22111a) extending continuously from the first edge (22114) to the second edge (22115), and a filler of the second filled region (22111b) extending continuously from the third edge (22116) to the fourth edge (22117).

9. The battery cell (21) according to any one of claims 1-8, wherein in the thickness direction (A) of the foam metal layer (2211), a dimension of the foam metal layer (2211) is H1, and a thickness of the filler of the single filled region (22111) is H2, H2/H1=(0.95-1).

10. The battery cell (21) according to claim 1, wherein the filler is a rubber material.

11. The battery cell (21) according to claim 10, wherein the filler comprises one or more selected from the group consisting of natural rubber, styrene-butadiene rubber, butadiene rubber, isoprene rubber, neoprene, butyl rubber, nitrile rubber and silicone rubber.

12. A battery (100), comprising a box body (10), and multiple battery cells (20) each of which is according to any preceding claim, wherein the multiple battery cells (20) are accommodated in the box body (10).

13. An electric device, comprising at least one battery cell (20) each of which is according to any preceding claim.

14. A manufacturing method of a negative electrode plate (221), comprising:
filling a filler into pores of one part of a foam metal layer (2211) to form a filled region (22111);
wherein in a thickness direction (A) of the foam metal layer (2211), two opposite side surfaces of the filler are of an insulation material, and cover two opposite side surfaces of the foam metal layer (2211);
wherein the filler is a polymer;
wherein the foam metal layer (2211) further includes an unfilled region (22110), and pores in the unfilled region (22110) are used for depositing a metal;
wherein in the thickness direction (A) of the foam metal layer (2211), the projection of the filler at least partially overlaps with the projection of the coated region of the positive electrode plate;
wherein the foam metal layer (2211) comprises a negative electrode body (22112) and a negative electrode tab (22113), the negative electrode body (22112) and the negative electrode tab (22113) are distributed in the first direction (B), and two opposite ends of the negative electrode body (22112) in the first direction (B) each have the filled region (22111); and
the first direction (B) is perpendicular to the thickness direction (A) of the foam metal layer (2211).

15. The manufacturing method of a negative electrode plate (221) according to claim 14, wherein the filler is a rubber material; and
optionally, the filler comprises one or more selected from the group consisting of natural rubber, styrene-butadiene rubber, butadiene rubber, isoprene rubber, neoprene, butyl rubber, nitrile rubber and silicone rubber.

## Patentansprüche

1. Batteriezelle (20), umfassend ein Gehäuse (21) und mindestens eine in dem Gehäuse (21) untergebrachte Elektrodenanordnung (22), wobei die Elektrodenanordnung (22) eine positive Elektrodenplatte, einen Separator und eine negative Elektrodenplatte aufweist, wobei die negative Elektrodenplatte (221) eine Schaummetallschicht (2211) umfasst,
wobei ein Teil der Schaummetallschicht (2211) eine gefüllte Region (22111) ist, und Poren der gefüllten Region (22111) mit einem Füllstoff gefüllt sind;
wobei in der Dickenrichtung (A) der Schaummetallschicht (2211) zwei gegenüberliegende Seitenoberflächen des Füllstoffs aus einem Isoliermaterial bestehen und zwei gegenüberliegende Seitenoberflächen der Schaummetallschicht (2211) abdecken;
wobei der Füllstoff ein Polymer ist;
wobei die Schaummetallschicht (2211) ferner eine ungefüllte Region (22110) einschließt und Poren in der ungefüllten Region (22110) zum Abscheiden eines Metalls verwendet werden;
wobei in der Dickenrichtung (A) der Schaummetallschicht (2211) der Vorsprung des Füllstoffs mindestens teilweise mit dem Vorsprung der beschichteten Region der positiven Elektrodenplatte überlappt;
wobei die Schaummetallschicht (2211) einen negativen Elektrodenkörper (22112) und eine negative Elektrodenlasche (22113) umfasst, der negative Elektrodenkörper (22112) und die negative Elektrodenlasche (22113) in der ersten Richtung (B) verteilt sind, und zwei gegenüberliegende Enden des negativen Elektrodenkörpers (22112) in der ersten Richtung (B) jeweils die gefüllte Region (22111) aufweisen; und
die erste Richtung (B) senkrecht zur Dickenrichtung (A) der Schaummetallschicht (2211) ist.

2. Batteriezelle (21) nach Anspruch 1, wobei in der Dickenrichtung (A) der Schaummetallschicht (2211) ein Vorsprung mindestens eines Endes der beschichteten Region (2221) der positiven Elektrodenplatte (222) in einer ersten Richtung (B) mit dem Vorsprung des Füllstoffs überlappt; und
die erste Richtung (B) senkrecht zur Dickenrichtung (A) der Schaummetallschicht (2211) ist.

3. Batteriezelle (21) nach Anspruch 1 oder 2, wobei der Füllstoff kontinuierlich in einer zweiten Richtung (C) bereitgestellt wird und die zweite Richtung (C) senkrecht zu der ersten Richtung (B) und der Dickenrichtung (A) der Schaummetallschicht (2211) ist.

4. Batteriezelle (21) nach Anspruch 3, wobei in der zweiten Richtung (C) eine Abmessung der beschichteten Region (2221) der positiven Elektrodenplatte (222) L1 ist, und eine Abmessung des Füllstoffs der einzelnen gefüllten Region (22111) L2 ist, L1≤L2.

5. Batteriezelle (21) nach Anspruch 3 oder 4, wobei in der zweiten Richtung (C) eine Abmessung der Schaummetallschicht (2211) L3 ist, L2=L3.

6. Batteriezelle (21) nach einem der Ansprüche 1 bis 5, wobei in der ersten Richtung (B) eine Abmessung der beschichteten Region (2221) der positiven Elektrodenplatte (222) M1 ist, und eine Abmessung einer überlappenden Region eines Vorsprungs des Füllstoffs der einzelnen gefüllten Region (22111) in der Dickenrichtung (A) der Schaummetallschicht (2211) und eines Vorsprungs der beschichteten Region (2221) der positiven Elektrodenplatte (222) in der Dickenrichtung (A) der Schaummetallschicht (2211) M2 ist, M2/M1≥3 %.

7. Batteriezelle (21) nach Anspruch 6, wobei M2/M1≤10 %.

8. Batteriezelle (21) nach Anspruch 1, wobei die Schaummetallschicht (2211) eine erste Kante (22114) und eine zweite Kante (22115), die in der ersten Richtung (B) verteilt sind, und eine dritte Kante (22116) und eine vierte Kante (22117), die in der zweiten Richtung (C) verteilt sind, umfasst;
die erste Richtung (B) und die zweite Richtung (C) senkrecht zueinander sind und beide senkrecht zur Dickenrichtung (A) der Schaummetallschicht (2211) sind; und
die gefüllte Region (22111) eine erste gefüllte Region (22111a) und eine zweite gefüllte Region (22111b) umfasst, wobei sich ein Füllstoff der ersten gefüllten Region (22111a) kontinuierlich von der ersten Kante (22114) zur zweiten Kante (22115) erstreckt, und sich ein Füllstoff der zweiten gefüllten Region (22111b) kontinuierlich von der dritten Kante (22116) zur vierten Kante (22117) erstreckt.

9. Batteriezelle (21) nach einem der Ansprüche 1 bis 8, wobei in der Dickenrichtung (A) der Schaummetallschicht (2211) eine Abmessung der Schaummetallschicht (2211) H1 ist und eine Dicke des Füllstoffs der einzelnen gefüllten Region (22111) H2 ist, H2/H1 = (0,95-1).

10. Batteriezelle (21) nach Anspruch 1, wobei der Füllstoff ein Gummimaterial ist.

11. Batteriezelle (21) nach Anspruch 10, wobei der Füllstoff einen oder mehrere Stoffe umfasst, die aus der Gruppe bestehend aus Naturkautschuk, Styrolbutadienkautschuk, Butadienkautschuk, Isoprenkautschuk, Neopren, Butylkautschuk, Nitrilkautschuk und Silikonkautschuk ausgewählt sind.

12. Batterie (100), umfassend einen Kastenkörper (10) und mehrere Batteriezellen (20), von denen jede nach einem der vorstehenden Ansprüche ist, wobei die mehreren Batteriezellen (20) in dem Kastenkörper (10) untergebracht sind.

13. Elektrische Vorrichtung, umfassend mindestens eine Batteriezelle (20), von denen jede nach einem der vorstehenden Ansprüche ist.

14. Herstellungsverfahren für eine negative Elektrodenplatte (221), umfassend:
Einfüllen eines Füllstoffs in Poren eines Teils einer Schaummetallschicht (2211), um eine gefüllte Region (22111) zu bilden;
wobei in einer Dickenrichtung (A) der Schaummetallschicht (2211) zwei gegenüberliegende Seitenoberflächen des Füllstoffs aus einem Isoliermaterial bestehen und zwei gegenüberliegende Seitenoberflächen der Schaummetallschicht (2211) abdecken;
wobei der Füllstoff ein Polymer ist;
wobei die Schaummetallschicht (2211) ferner eine ungefüllte Region (22110) einschließt und Poren in der ungefüllten Region (22110) zum Abscheiden eines Metalls verwendet werden;
wobei in der Dickenrichtung (A) der Schaummetallschicht (2211) der Vorsprung des Füllstoffs mindestens teilweise mit dem Vorsprung der beschichteten Region der positiven Elektrodenplatte überlappt;
wobei die Schaummetallschicht (2211) einen negativen Elektrodenkörper (22112) und eine negative Elektrodenlasche (22113) umfasst, der negative Elektrodenkörper (22112) und die negative Elektrodenlasche (22113) in der ersten Richtung (B) verteilt sind, und zwei gegenüberliegende Enden des negativen Elektrodenkörpers (22112) in der ersten Richtung (B) jeweils die gefüllte Region (22111) aufweisen; und
die erste Richtung (B) senkrecht zu der Dickenrichtung (A) der Schaummetallschicht (2211) ist.

15. Herstellungsverfahren für eine negative Elektrodenplatte (221) nach Anspruch 14, wobei der Füllstoff ein Gummimaterial ist; und
optional, wobei der Füllstoff einen oder mehrere Stoffe umfasst, die aus der Gruppe bestehend aus Naturkautschuk, Styrolbutadienkautschuk, Butadienkautschuk, Isoprenkautschuk, Neopren, Butylkautschuk, Nitrilkautschuk und Silikonkautschuk ausgewählt sind.

## Revendications

1. Cellule de batterie (20), comprenant un logement (21) et au moins un ensemble électrode (22) reçu dans le logement (21), l'ensemble électrode (22) ayant une plaque d'électrode positive, un séparateur et une plaque d'électrode négative, la plaque d'électrode négative (221) comprenant une couche de mousse métallique (2211),
dans laquelle une partie de la couche de mousse métallique (2211) est une région remplie (22111), et des pores de la région remplie (22111) sont remplis d'une matière de remplissage ;
dans laquelle dans la direction de l'épaisseur (A) de la couche de mousse métallique (2211), deux surfaces latérales opposées de la matière de remplissage sont faites d'un matériau d'isolation, et couvrent deux surfaces latérales opposées de la couche de mousse métallique (2211) ;
dans laquelle la matière de remplissage est un polymère ;
dans laquelle la couche de mousse métallique (2211) inclut en outre une région non remplie (22110), et des pores dans la région non remplie (22110) sont utilisés pour la dépose d'un métal ;
dans laquelle dans la direction de l'épaisseur (A) de la couche de mousse métallique (2211), la projection de la matière de remplissage chevauche au moins en partie la projection de la région revêtue de la plaque d'électrode positive ;
dans laquelle la couche de mousse métallique (2211) comprend un corps d'électrode négative (22112) et une patte d'électrode négative (22113), le corps d'électrode négative (22112) et la patte d'électrode négative (22113) sont distribués dans la première direction (B), et deux extrémités opposées du corps d'électrode négative (22112) dans la première direction (B) comportent chacune la région remplie (22111) ; et
la première direction (B) est perpendiculaire à la direction de l'épaisseur (A) de la couche de mousse métallique (2211).

2. Cellule de batterie (21) selon la revendication 1, dans laquelle dans la direction de l'épaisseur (A) de la couche de mousse métallique (2211), une projection d'au moins une extrémité de la région revêtue (2221) de la plaque d'électrode positive (222) dans une première direction (B) chevauche la projection de la matière de remplissage ; et
la première direction (B) est perpendiculaire à la direction de l'épaisseur (A) de la couche de mousse métallique (2211).

3. Cellule de batterie (21) selon la revendication 1 ou 2, dans laquelle la matière de remplissage est fournie de manière continue dans une deuxième direction (C), et la deuxième direction (C) est perpendiculaire à la première direction (B) et à la direction de l'épaisseur (A) de la couche de mousse métallique (2211).

4. Cellule de batterie (21) selon la revendication 3, dans laquelle dans la deuxième direction (C), une dimension de la région revêtue (2221) de la plaque d'électrode positive (222) est L1, et une dimension de la matière de remplissage de la région remplie unique (22111) est L2, L1 ≤ L2.

5. Cellule de batterie (21) selon la revendication 3 ou 4, dans laquelle dans la deuxième direction (C), une dimension de la couche de mousse métallique (2211) est L3, L2=L3.

6. Cellule de batterie (21) selon l'une quelconque des revendications 1 à 5, dans laquelle dans la première direction (B), une dimension de la région revêtue (2221) de la plaque d'électrode positive (222) est M1, et une dimension d'une région de chevauchement d'une projection de la matière de remplissage de la région remplie unique (22111) dans la direction de l'épaisseur (A) de la couche de mousse métallique (2211) et une projection de la région revêtue (2221) de la plaque d'électrode positive (222) dans la direction de l'épaisseur (A) de la couche de mousse métallique (2211) est M2, M2/M1 ≥ 3 %.

7. Cellule de batterie (21) selon la revendication 6, dans laquelle M2/M1 ≤ 10 %.

8. Cellule de batterie (21) selon la revendication 1, dans laquelle la couche de mousse métallique (2211) comprend un premier bord (22114) et un deuxième bord (22115) distribués dans la première direction (B), et un troisième bord (22116) et un quatrième bord (22117) distribués dans la deuxième direction (C) ;
la première direction (B) et la deuxième direction (C) sont perpendiculaires l'une par rapport à l'autre et les deux sont perpendiculaires à la direction de l'épaisseur (A) de la couche de mousse métallique (2211) ; et
la région remplie (22111) comprend une première région remplie (22111a) et une deuxième région remplie (22111b), une matière de remplissage de la première région remplie (22111a) s'étendant de manière continue du premier bord (22114) au deuxième bord (22115), et une matière de remplissage de la deuxième région remplie (22111b) s'étendant de manière continue du troisième bord (22116) au quatrième bord (22117).

9. Cellule de batterie (21) selon l'une quelconque des revendications 1 à 8, dans laquelle dans la direction de l'épaisseur (A) de la couche de mousse métallique (2211), une dimension de la couche de mousse métallique (2211) est H1, et une épaisseur de la matière de remplissage de la région remplie unique (22111) est H2, H2/H1 = (0,95-1).

10. Cellule de batterie (21) selon la revendication 1, dans laquelle la matière de remplissage est une matière de caoutchouc.

11. Cellule de batterie (21) selon la revendication 10, dans laquelle la matière de remplissage comprend un ou plusieurs sélectionnés dans le groupe constitué par un caoutchouc naturel, un caoutchouc styrène-butadiène, un caoutchouc butadiène, un caoutchouc isoprène, du néoprène, un caoutchouc butyle, un caoutchouc nitrile et un caoutchouc de silicone.

12. Batterie (100) comprenant un corps de boîte (10), et plusieurs cellules de batterie (20) chacune d'elles étant selon l'une quelconque des revendications précédentes, les plusieurs cellules de batterie (20) étant reçues dans le corps de boîte (10).

13. Dispositif électrique, comprenant au moins une cellule de batterie (20) chacune d'elles étant selon l'une quelconque des revendications précédentes.

14. Procédé de fabrication d'une plaque d'électrode négative (221), comprenant les étapes consistant à :
remplir une matière de remplissage dans des pores d'une partie d'une couche de mousse métallique (2211) pour former une région remplie (22111) ;
dans laquelle dans une direction de l'épaisseur (A) de la couche de mousse métallique (2211), deux surfaces latérales opposées de la matière de remplissage sont faites d'un matériau d'isolation, et couvrent deux surfaces latérales opposées de la couche de mousse métallique (2211) ;
dans laquelle la matière de remplissage est un polymère ;
dans laquelle la couche de mousse métallique (2211) inclut en outre une région non remplie (22110), et des pores dans la région non remplie (22110) sont utilisés pour la dépose d'un métal ;
dans laquelle dans la direction de l'épaisseur (A) de la couche de mousse métallique (2211), la projection de la matière de remplissage chevauche au moins en partie la projection de la région revêtue de la plaque d'électrode positive ;
dans laquelle la couche de mousse métallique (2211) comprend un corps d'électrode négative (22112) et une patte d'électrode négative (22113), le corps d'électrode négative (22112) et la patte d'électrode négative (22113) sont distribués dans la première direction (B), et deux extrémités opposées du corps d'électrode négative (22112) dans la première direction (B) comportent chacune la région remplie (22111) ; et
la première direction (B) est perpendiculaire à la direction de l'épaisseur (A) de la couche de mousse métallique (2211).

15. Procédé de fabrication d'une plaque d'électrode négative (221) selon la revendication 14, dans lequel la matière de remplissage est une matière de caoutchouc ; et
éventuellement, la matière de remplissage comprend un ou plusieurs sélectionnés dans le groupe constitué par un caoutchouc naturel, un caoutchouc styrène-butadiène, un caoutchouc butadiène, un caoutchouc isoprène, du néoprène, un caoutchouc butyle, un caoutchouc nitrile et un caoutchouc silicone.
